# EUROPEAN PATENT APPLICATION

(11) **EP 3 290 716 A1**
(43) Date of publication of application: **07.03.2018**
(21) Application number: 15890773.3
(22) Date of filing: 30.10.2015
(51) Int. Cl.: F04D 29/58, A47L 9/00, F04D 29/44, H02K 9/06

(54) **CENTRIFUGAL BLOWER AND CLEANER**

(30) Priority: 28.04.2015 JP 2015091565; 29.05.2015 US 201562168135 P
(71) Applicant: Nidec Corporation, Kyoto-shi, Kyoto 601-8205 (JP)
(72) Inventor: SAWADA, Tomoyoshi, Kyoto-shi Kyoto 601-8205 (JP); FUKUSHIMA, Machiko, Kyoto-sh Kyoto 601-8205 (JP)
(74) Representative: Zimmermann, Tankred Klaus
(86) International application number: PCT/JP2015/080697
(87) International publication number: WO 2016/174790

(57) **Abstract**

A centrifugal blower includes a motor including a stator and a motor cover, a centrifugal impeller rotating together with a rotating portion of the motor, and a blower casing. The stator includes a stator core including a toric core back. The motor cover includes an upper surface, and a cylindrical outer peripheral surface extending downwards. The blower casing disposed above the impeller includes an upper side casing top plate portion in which an intake port is disposed at the middle, and a cylindrical wall portion extending downwards from the upper side casing top plate portion. An inner peripheral surface of the wall portion and the outer peripheral surface of the motor cover forms a flow path continuous in the axial direction. A discharge port is formed in a lower end portion of the flow path. The core back includes an exposed portion exposed to the flow path.

## Description

### Technical Field

The present invention relates to a centrifugal blower and a vacuum cleaner.

### Background Art

Conventionally, a centrifugal blower is used in high-output blowing devices, such as a vacuum cleaner and an air intake and exhaust device. The centrifugal blower includes a motor that generates driving power, an impeller that sends air, and a blower casing that houses the motor and the impeller. A conventional centrifugal blower is described in Japanese Unexamined Patent Application Publication No. 2015-59507, for example.

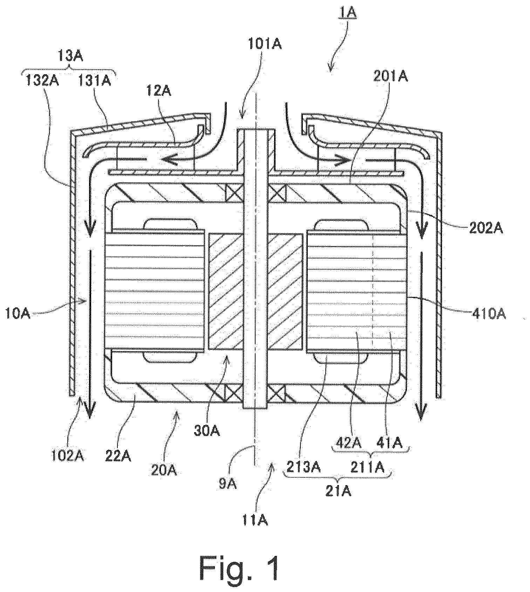

In recent years, there is a need for higher output and higher efficiency of centrifugal blowers. In high-output blowing devices, since the rotation speed is high and a large amount of heat is generated by the stator serving as an armature, the stator needs to be cooled efficiently. In a centrifugal blower in Japanese Unexamined Patent Application Publication No. 2015-59507, a stator is cooled efficiently by having an air flow generated by rotation of an impeller pass both an inner side of the stator in a radial direction and an outer side thereof in the radial direction (Fig. 1).
PTL 1: Japanese Unexamined Patent Application Publication No. 2015-59507

### Summary of Invention

### Technical Problem

However, in the structure of the centrifugal blower in Japanese Unexamined Patent Application Publication No. 2015-59507, the air flow generated by the rotation of the impeller is dispersed to the inner side of the stator in the radial direction and to the outer side thereof in the radial direction; accordingly, the speed of the air flow is decreased. Accordingly, air blowing efficiency of the centrifugal blower is decreased making it difficult to achieve a higher output and a higher efficiency.

An object of the present invention is to provide a technique that is capable of efficiently cooling the stator without decreasing the air blowing efficiency of the centrifugal blower.

### Solution to Problem

An exemplary first invention of the present application is a centrifugal blower including a stationary portion that includes a stator and a motor cover that holds the stator, a motor that includes a rotating portion that rotate about a vertically extending central axis, a centrifugal impeller that is disposed above the motor and that rotates together with the rotating portion, and a blower casing that houses therein the motor and the impeller. In the centrifugal blower, the stator includes a stator core that includes a toric core back and a plurality of teeth that extend inwards in a radial direction, a coil is formed of a conductive wire wound around the teeth, the motor cover includes an upper surface above the stator, the upper surface widening in a substantially perpendicular manner with respect to the central axis, and a cylindrical outer peripheral surface that extends downwards from an outer edge of the upper surface, the blower casing includes an intake port, an upper side casing top plate portion disposed above the impeller, the intake port being disposed at a middle of the upper side casing top plate portion, and a cylindrical wall portion that extend downwards from the upper side casing top plate portion to an outer side of the motor cover in the radial direction, a flow path continuous in the axial direction is constituted by an inner peripheral surface of the wall portion and the outer peripheral surface of the motor cover, a discharge port in communication with an external space is provided at a lower end portion of the flow path, and the core back includes an exposed portion exposed to the flow path in at least a portion of the outer peripheral surface of the core back.

### Advantageous Effects of Invention

According to the exemplary first invention of the present application, the stator can be cooled efficiently without decreasing the air blowing efficiency of the centrifugal blower.

### Brief Description of Drawings

[Fig. 1] Fig. 1 is a longitudinal section of a centrifugal blower according to a first embodiment.
[Fig. 2] Fig. 2 is a longitudinal section of a centrifugal blower according to a second embodiment.
[Fig. 3] Fig. 3 is a cross-sectional view of the centrifugal blower according to the second embodiment.
[Fig. 4] Fig. 4 is a longitudinal section of a portion of the centrifugal blower according to the second embodiment.
[Fig. 5] Fig. 5 is a longitudinal section of a centrifugal blower according to a third embodiment.
[Fig. 6] Fig. 6 is a side view of a motor and an impeller according to the third embodiment.
[Fig. 7] Fig. 7 is a cross-sectional view of the centrifugal blower according to the third embodiment.
[Fig. 8] Fig. 8 is a perspective view of a vacuum cleaner.

### Description of Embodiments

Hereinafter, exemplary embodiments of the present invention will be described with reference to the drawings. Note that in the present application, a direction parallel to a central axis of a centrifugal blower is referred to as an "axial direction", a direction orthogonal to the central axis of the centrifugal blower is referred to as a "radial direction", and a direction along a circumference extending about a center of the central axis of the centrifugal blower is referred to as a "circumferential direction". Furthermore, in the present application, shapes and positional relationships of parts are described while the axial direction is an up-down direction, and an impeller side with respect to a motor is an upper side. However, the definition of the up-down direction is not intended to limit the orientations of the centrifugal blower while manufacturing and while in use.

### <1. First Embodiment>

Fig. 1 is a longitudinal section of a centrifugal blower 1A according to a first embodiment. As illustrated in Fig. 1, the centrifugal blower 1A includes a motor 11A, an impeller 12A, and a blower casing 13A.

The motor 11A includes a stationary portion 20A including a stator 21A and a motor cover 22A that holds the stator 21A, and a rotating portion 30A that rotates about a central axis 9A that extends vertically.

The stator 21A includes a stator core 211A and coils 213A. The stator core 211A includes a toric core back 41A and a plurality of teeth 42A that extend inwards in the radial direction from the core back 41A. The coils 213A are formed of a conducting wire wound around the teeth 42A.

The motor cover 22A holds the stator 21A. The motor cover 22A includes, above the stator 21A, an upper surface 201A that widens in a substantially perpendicular manner with respect to the central axis 9A, and a cylindrical outer peripheral surface 202A that extends downwards from an outer edge of the upper surface 201A.

The impeller 12A is a centrifugal impeller that is disposed above the motor 11A and that rotates together with the rotating portion 30A of the motor 11A.

The blower casing 13A houses the motor 11A and the impeller 12A. The blower casing 13A includes an intake port 101A, an upper side casing top plate portion 131A, and a wall portion 132A. The upper side casing top plate portion 131A is disposed over the impeller 12A. Furthermore, the intake port 101A is provided at the middle of the upper side casing top plate portion 131A. On the outer side of the motor cover 22A in the radial direction, the wall portion 132A extends downwards from the upper side casing top plate portion 131A in a tubular manner.

In the centrifugal blower 1A, a flow path 10A continuous in the axial direction is formed between an inner peripheral surface of the wall portion 132A and the outer peripheral surface 202A of the motor cover 22A. A discharge port 102A that is in communication with an external space is formed in a lower end portion of the flow path 10A. Furthermore, the core back 41A of the stator 21A includes, in at least a portion of the outer peripheral surface, exposed portions 410A exposed to the flow path 10A.

The rotating portion 30A of the motor 11A and the impeller 12A rotate when the centrifugal blower 1A is driven. When the impeller 12A rotates, as depicted by solid line arrows in Fig. 1, a gas above the blower casing 13A is suctioned into the impeller 12A through the intake port 101A, and is discharged towards the outer side of the impeller 12A in the radial direction and below the impeller 12A.

The gas discharged from the impeller 12A proceeds downwards inside the flow path 10A in a straight manner and is discharged to the outside through the discharge port 102A. The flow path 10A extending in a straight manner suppresses a decrease in the flow speed of the air inside the flow path 10A. Accordingly, a decrease in the air blowing efficiency of the centrifugal blower 1A is suppressed.

Meanwhile, the stator core 211A being exposed to the flow path 10A in the exposed portions 410A dissipates heat generated in the stator 21A from the exposed portions 410A. With the above, cooling of the stator 21A can be performed efficiently. Accordingly, in the centrifugal blower 1A, the stator 21A can be cooled efficiently without decreasing the air blowing efficiency.

### <2. Second Embodiment>

### <2-1. Configuration of Centrifugal Blower>

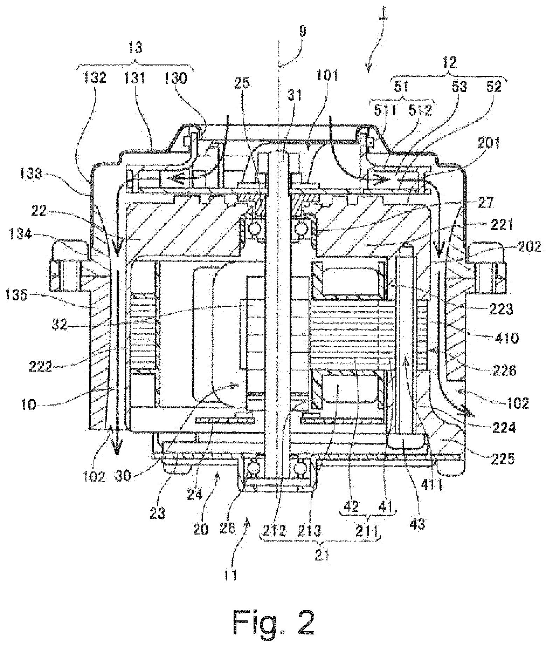

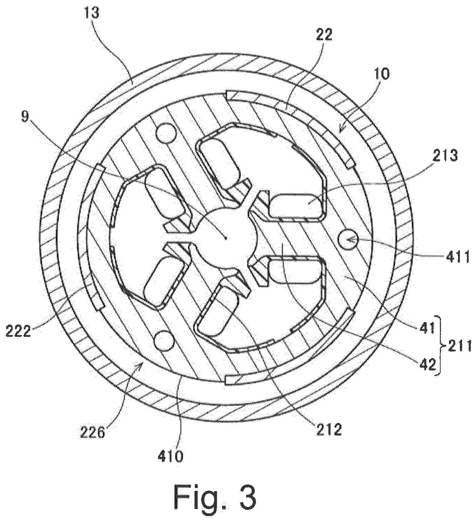

Fig. 2 is a longitudinal section of a centrifugal blower 1 according to a second embodiment. Fig. 3 is a cross-sectional view of the centrifugal blower 1 in an area in the axial direction where a stator core 211 is disposed. The centrifugal blower 1 is a turbo centrifugal fan that suctions air thereabove through an intake hole provided in an upper portion, and that discharges air downwards. Compared with a sirocco centrifugal fan, the turbo centrifugal fan is higher in efficiency and is lower in noise.

The centrifugal blower 1 of the present embodiment is, for example, provided in a vacuum cleaner and is used to generate suction force. However, the centrifugal blower of the present invention can be one that is used for applications other than a vacuum cleaner. For example, the centrifugal blower may be a range hood fan, another blowing device, such as an air supply and exhaust device, used in a duct of a building, or a device that performs intake and exhaust of air and that is mounted in a household electric appliance, a medical appliance, a large piece of equipment for industrial use, or the like.

As illustrated in Fig. 2, the centrifugal blower 1 includes a motor 11, an impeller 12, and a blower casing 13. A later-described rotating portion 30 of the motor 11 and the impeller 12 rotate about a central axis 9.

The motor 11 is an inner rotor brushless DC motor. The motor 11 includes a stationary portion 20 and the rotating portion 30. The stationary portion 20 relatively stops with respect to the blower casing 13. The rotating portion 30 is rotatably supported about the central axis 9 with respect to the stationary portion 20.

The stationary portion 20 includes a stator 21, a motor cover 22, a bottom plate 23, a circuit board 24, an upper bearing 25, and a lower bearing 26. The rotating portion 30 includes a shaft 31 and a rotor 32.

The stator 21 is an armature that generates a magnetic flux in accordance with a driving current supplied from a circuit board 24. The stator 21 annularly surrounds the vertically extending central axis 9. As illustrated in Figs. 2 and 3, the stator 21 includes the stator core 211, insulators 212, and a plurality of coils 213.

The stator core 211 is formed of a lamination steel plate in which electromagnetic steel plates are laminated in the axial direction. The stator core 211 includes a toric core back 41 and a plurality of teeth 42 that extend inwards in the radial direction from the core back 41. The core back 41 is disposed substantially coaxially with the central axis 9. The plurality of teeth 42 are arranged in a substantially equidistant manner in the circumferential direction.

The insulators 212 are attached to the stator core 211. A resin that is an insulating material is used as the material of the insulators 212. The insulators 212 cover the two end faces of the teeth 42 in the axial direction and the two end faces in the circumferential direction. The coils 213 are each formed of a conducting wire that is wound around a corresponding one of the teeth 42 with the insulators 212 in between.

As illustrated in Fig. 3, the motor 11 of the present embodiment is a 3-phase, 3-slot motor including three teeth 42 and three coils 213. By reducing the number of slots in the above manner, the number of switching of the current supplied to each phase in a single rotation can be reduced. In other words, the number of switching in each slot, which corresponds to a phase, can be one in each of the three slots while the rotor 32 rotates once. The centrifugal blower 1 is used in a vacuum cleaner, and may be used in a high rotation range of about 60,000 rotations per minute. By reducing the number of slots, the number of switching does not become excessively high during high rotation, and an appropriate control can be performed.

The motor cover 22 is a member that holds the stator 21 and the upper bearing 25. As illustrated in Fig. 2, the motor cover 22 includes an upper plate portion 221, a lateral plate portion 222, a first fixed portion 223, a second fixed portion 224, and third fixed portions 225.

The upper plate portion 221 is a plate-shaped region that widens above the stator 21 in a substantially perpendicular manner with respect to the central axis 9. The upper bearing 25 is held on the inner side of the upper plate portion 221 in the radial direction. The lateral plate portion 222 extends downwards in the axial direction from an outer edge of the upper plate portion 221 in a substantially cylindrical manner. Accordingly, an upper surface 201 of the motor cover 22, in other words, an upper surface of the upper plate portion 221 is, above the stator 21, substantially perpendicular to the central axis 9. Furthermore, an outer peripheral surface 202 of the motor cover 22, in other words, an outer peripheral surface of the lateral plate portion 222 extends downwards in a tubular manner from an outer edge of the upper surface of the motor cover 22. The lateral plate portion 222 is provided with window portions 226 that penetrate thereof in the radial direction.

The first fixed portion 223 and the second fixed portion 224 protrude inwards in the radial direction from an inner peripheral surface of the lateral plate portion 222. The first fixed portion 223 is disposed above the core back 41 of the stator core 211. The first fixed portion 223 includes screw holes that are recessed upwards from an underside thereof. The second fixed portion 224 is disposed below the core back 41 of the stator core 211. The second fixed portion 224 includes screw holes that vertically penetrate thereof.

The core back 41 is provided with through holes 411 that penetrate thereof in the axial direction. The stator 21 and the motor cover 22 are fixed to each other by fitting screws 43 in the screw holes provided in the motor cover 22, and the through holes 411.

In the motor 11 of the present embodiment, the screw holes of the first fixed portion 223 and the second fixed portion 224 in which the screws 43 are fitted and the through holes 411 are provided at three positions in the circumferential direction. Note that the fixing positions of the stator 21 and the motor cover 22 are not limited to three positions and may be two positions, or four or more positions. Furthermore, the method of fixing the stator 21 and the motor cover 22 to each other is not limited to screw fixing. The stator 21 and the motor cover 22 may be fixed to each other by another method, such as press fitting or adhesion.

The third fixed portions 225 protrude outwards in the radial direction from near a lower end portion of the lateral plate portion 222. The bottom plate 23 is screw fixed to the third fixed portions 225. In the motor 11 of the present embodiment, the third fixed portions 225 are provided at three positions in the circumferential direction. Note that the fixing positions of the motor cover 22 and the bottom plate 23 are not limited to three positions and may be two positions, or four or more positions. Furthermore, the motor cover 22 and the bottom plate 23 may be fixed to each other by another method.

The bottom plate 23 is a member that covers at least a portion of the opening below the motor cover 22. The bottom plate 23 widens in a substantially perpendicular manner with respect to the central axis 9. The lower bearing 26 is held at the middle of the bottom plate 23. The stator 21, the circuit board 24, the upper bearing 25, the lower bearing 26, and the rotor 32 are housed inside the casing constituted by the motor cover 22 and the bottom plate 23.

The circuit board 24 is disposed below the stator 21 and substantially perpendicular to the central axis 9. An electronic component that constitutes an electric circuit for supplying a driving current to the coils 213 is mounted on the circuit board 24. An end portion of the conducting wire that constitutes the coils 213 is electrically connected to the electric circuit on the circuit board 24.

The upper bearing 25 is a mechanism that supports the shaft 31 in a rotatable manner with respect to the motor cover 22. The upper bearing 25 is disposed below a lower side labyrinth portions 71 to 73 described later. The lower bearing 26 is a mechanism that supports the shaft 31 in a rotatable manner with respect to the bottom plate 23. A Ball bearing in which spherical rolling elements are interposed between an inner ring and an outer ring is used in each of the upper bearing 25 and the lower bearing 26.

An elastic member 27 is interposed between the motor cover 22 and the upper bearing 25. With the above, vibration during rotation of the motor 11 and the impeller 12 can be reduced.

The shaft 31 is a columnar member that is disposed along the central axis 9. The shaft 31 is supported by the upper bearing 25 and the lower bearing 26 and rotates about the central axis 9. The upper end portion of the shaft 31 protrudes above the motor cover 22, and the impeller 12 is fixed thereto. In the present embodiment, while the impeller 12 is directly fixed to the shaft 31, the impeller 12 may be indirectly fixed to the shaft 31 with another member in between.

The rotor 32 is connected to the shaft 31 and rotates together with the shaft 31. The rotor 32 of the present embodiment is formed of a magnetic resin formed in a substantially cylindrical shape. A north pole and a south pole of magnets are alternately attached on an outer peripheral surface of the rotor 32. Furthermore, the outer peripheral surface of the rotor 32 opposes the end faces of the teeth 42 on the inner side in the radial direction with a slight gap in between in the radial direction. In other words, the rotor 32 includes a pole face that faces the stator 21 in the radial direction.

Note that in the present embodiment, while the rotor 32 formed of magnetic resin is used, the rotor 32 may be a plurality of magnets fixed to an outer peripheral surface or inside a cylindrical rotor core that is a magnetic material. Furthermore, the rotor 32 may be constituted by a single piece of magnet.

When the motor 11 is driven, a driving current is supplied to the coils 213 from the electric circuit on the circuit board 24, and a magnetic flux is generated in the plurality of teeth 42 of the stator core 211. With the above, a torque in the circumferential direction is generated through the effect of the magnetic flux between the teeth 42 and the rotor 32. As a result, the rotating portion 30 rotates about the central axis 9. Furthermore, together with the rotation of the rotating portion 30, the impeller 12 rotates.

The impeller 12 is a so-called turbo centrifugal impeller. The impeller 12 is disposed above the motor cover 22 of the motor 11. As illustrated in Fig. 2, the impeller 12 includes an upper shroud 51, a lower shroud 52, and a plurality of blades 53.

The upper shroud 51 includes a cylindrical portion 511 and an upper shroud top plate portion 512. The upper shroud 51 is disposed above the lower shroud 52 and the plurality of blades 53.

The cylindrical portion 511 is a region substantially cylindrical about the central axis 9. The cylindrical portion 511 of the present embodiment has a substantially uniform diameter irrespective of the position in the axial direction. Note that the cylindrical portion 511 may have a shape in which the diameter becomes larger towards the lower side in the axial direction. An intake port 101 is formed between the inner peripheral surface of the cylindrical portion 511 and an inner peripheral surface of a later-described cylindrical portion 130 of the blower casing 13. In other words, the intake port 101 is provided at the middle of the upper shroud 51.

The upper shroud top plate portion 512 widens outwards in the radial direction from a lower end portion of the cylindrical portion 511. A position of an outer edge of the upper shroud top plate portion 512 in the radial direction is substantially the same as a position of an outer edge of the lower shroud 52 in the radial direction.

The lower shroud 52 is a plate-shaped region that widens above the motor cover 22 in a substantially perpendicular manner with respect to the central axis 9. An underside of the lower shroud 52 opposes an upper surface of the motor cover 22 in the axial direction. An end portion of the lower shroud 52 on the inner side in the radial direction is fixed to the shaft 31 of the motor 11.

The blades 53 are disposed between the upper shroud 51 and the lower shroud 52. The plurality of blades 53 are disposed in a substantially equidistant manner in the circumferential direction. When the centrifugal blower 1 is driven, gas between the upper shroud 51 and the lower shroud 52 is accelerated towards the outer side in the radial direction with the plurality of blades 53.

The blower casing 13 includes an upper side casing top plate portion 131, a wall portion 132, and the cylindrical portion 130. The upper side casing top plate portion 131 is disposed over the impeller 12, and widens in an annular manner along an upper surface of the upper shroud 51. On the outer side of the motor 11 in the radial direction, the wall portion 132 extends downwards in a tabular manner from the upper side casing top plate portion 131. The motor 11 and the impeller 12 are housed on the inner side of the wall portion 132 in the radial direction. The cylindrical portion 130 extends downwards in a cylindrical manner from an inner end of the upper side casing top plate portion 131 in the radial direction. The intake port 101 is formed between the inner peripheral surface of the cylindrical portion 511 of the impeller 12 and the inner peripheral surface of the cylindrical portion 130. In other words, the intake port 101 is provided at the middle of the upper side casing top plate portion 131.

The blower casing 13 of the present embodiment is formed of three annular members, namely, an upper side casing 133, a middle casing 134, and a lower side casing 135. The middle casing 134 is disposed on the lower side of the upper side casing 133. Furthermore, the lower side casing 135 is disposed below the middle casing 134. The upper side casing 133 includes the upper side casing top plate portion 131 and an upper end of the wall portion 132. The middle casing 134 and the lower side casing 135 are cylindrical members that form the wall portion 132. The blower casing 13 of the present embodiment is formed of three members; however, the blower casing 13 may be formed of a single member or may be formed of two, or four or more members.

An outer peripheral surface of the motor cover 22 and an inner peripheral surface of the wall portion 132 of the blower casing 13 are disposed with a space in between in the radial direction. The space continuous in the axial direction between the outer peripheral surface of the motor cover 22 and the inner peripheral surface of the wall portion 132 is a flow path 10 of gas when the centrifugal blower 1 is driven.

Discharge ports 102 that are in communication with an external space is formed in lower end portions of the flow path 10. Specifically, as illustrated in Fig. 2, discharge ports 102 are formed between a lower end portion of the wall portion 132 of the blower casing 13 and the lateral plate portion 222 of the motor cover 22 at positions in the circumferential direction where the third fixed portions 225 of the motor cover 22 are not disposed. Furthermore, discharge ports 102 are formed between the lower end portion of the wall portion 132 of the blower casing 13 and the third fixed portion 225 of the motor cover 22 at positions in the circumferential direction where the third fixed portions 225 of the motor cover 22 are not disposed.

### <2-2. Flow of the Air Flow>

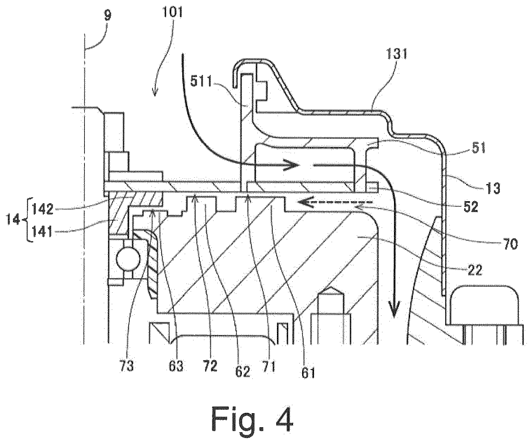

Referring to Figs. 2 to 4, a flow of the air flow when the centrifugal blower 1 is driven will be described next. Fig. 4 is a longitudinal section of a portion of the centrifugal blower 1.

When the centrifugal blower 1 is driven, a driving current is supplied to the stator 21 of the motor 11, and the rotating portion 30 of the motor 11 and the impeller 12 rotate. When the impeller 12 rotates, as illustrated by solid line arrows in Figs. 2 and 4, gas above the blower casing 13 is suctioned through the intake port 101, passes between the upper shroud 51 and the lower shroud 52, and is discharged towards the outer side of the impeller 12 in the radial direction.

The gas that has been discharged towards the outer side of the impeller 12 in the radial direction impinges against the wall portion 132 of the blower casing 13, as illustrated in Fig. 2, changes to a downward direction, and proceeds downwards in the axial direction inside the flow path 10 formed between the outer peripheral surface of the motor cover 22 and the inner peripheral surface of the wall portion 132. Furthermore, the air flow is discharged external to the centrifugal blower 1 from the discharge port 102 at a lower end portion of the flow path 10.

As described above, in the centrifugal blower 1, the gas that has been discharged from the impeller 12 flows downwards in the axial direction in a straight manner inside the flow path 10. The flow path 10, which is a blowing path after discharge from the impeller 12, extending downwards in a straight manner in the axial direction suppresses a decrease in the flow speed of the air inside the flow path 10. Accordingly, a decrease in the air blowing efficiency of the centrifugal blower 1 is suppressed.

Meanwhile, as described above, the lateral plate portion 222 of the motor cover 22 includes window portions 226. Accordingly, as illustrated in Figs. 2 and 3, portions of an outer peripheral surface of the core back 41 of the stator core 211 become exposed portions 410 exposed to the flow path 10.

When the motor 11 is driven, the coils 213 generate heat. The heat generated by the coils 213 is transmitted to the stator core 211 through the insulators 212. With the above, the entire temperature of the stator 21 increases. However, in the centrifugal blower 1, since portions of the core back 41 are exposed to the flow path 10, the core back 41 is cooled by the air flow that has occurred in the flow path 10. In other words, cooling of the stator 21 can be performed efficiently by having portions of the core back 41 be exposed to the flow path 10. As describe above, in the centrifugal blower 1, the stator 21 can be cooled efficiently without decreasing the air blowing efficiency.

As illustrated in Fig. 3, the exposed portions 410 are provided, in the core back 41, on the outer side of the teeth 42 in the radial direction. With the above, the areas in the core back 41 that are the closest to the coils 213 can be exposed to the flow path 10. Accordingly, the heat that has been generated in the coils 213 and that has been transmitted to the core back 41 from the teeth 42 can be efficiently dissipated to the gas inside the flow path 10. In other words, cooling of the stator 21 can be performed in a further efficient manner.

Furthermore, a width of each exposed portion 410 in the circumferential direction is larger than a width of each of the teeth 42 in the circumferential direction. With the above, the heat that has been generated in the coils 213 and that has been transmitted to the core back 41 from the teeth 42 can be dissipated in a further efficient manner. In other words, cooling of the stator 21 can be performed in a further efficient manner.

When the centrifugal blower 1 is driven, the air flow generated with the rotation of the impeller 12 flows downwards in the axial direction from the outer side of the lower shroud 52 in the radial direction along an inner surface of the blower casing 13. In the above, the flow path 10 inside the blower casing 13 does not widen much and extends downwards in the axial direction from near an outer end of the lower shroud 52. Accordingly, generation of a vortex inside the flow path 10 is suppressed, and the flow speed of the air oriented downwards inside the flow path 10 from the outer side of the lower shroud 52 in the radial direction does not become decreased easily. With the above, a decrease in the air blowing efficiency of the centrifugal blower 1 is suppressed further. Furthermore, a decrease in the flow rate of the gas passing inside the flow path 10 can be suppressed. Accordingly, a decrease in the efficiency of heat dissipation in the exposed portions 410 is suppressed, and cooling of the stator 21 can be performed in a further efficient manner.

As illustrated in Fig. 2, a distance between the central axis 9 and the outer peripheral surface of the motor cover 22 in the radial direction substantially coincides with a distance between the central axis 9 and an outer end of the lower shroud 52 of the impeller 12 in the radial direction. In other words, except for around the window portions 226 at least, a position in the radial direction of the inner end of the flow path 10 in the radial direction substantially coincides with a position in the radial direction of the outer end of the lower shroud 52 of the impeller 12 in the radial direction.

Accordingly, the air flow discharged from the impeller 12 does not have to flow on the inner side of the lower shroud 52 in the radial direction with respect to the outer end of the lower shroud 52 in the radial direction. Accordingly, the direction of the air flow is not bent 90° or more. With the above, when the air flow discharged from the impeller 12 flows towards the flow path 10, a decrease in the speed can be suppressed. In other words, a decrease in the air blowing efficiency of the centrifugal blower 1 can be suppressed further, and cooling of the stator 21 can be performed in a further efficient manner.

Note that the distance between the central axis 9 and the outer peripheral surface of the motor cover 22 in the radial direction may be longer that the distance between the central axis 9 and the outer end of the lower shroud 52 of the impeller 12 in the radial direction. In such a case as well, the direction of the air flow discharged from the impeller 12 and that flows towards the flow path 10 does not have to be bent 90° or more. In such a case as well, a decrease in the speed of the air flow discharged from the impeller 12 can be suppressed.

Furthermore, as illustrated in Figs. 2 and 3, a distance between the central axis 9 and the exposed portions 410 in the radial direction is shorter than a distance between the central axis 9 and a portion facing the flow path 10 in the outer peripheral surface of the motor cover 22 in the radial direction. Since the outer peripheral surface of the core back 41 is not smooth compared with the outer peripheral surface of the motor cover 22, the flow path resistance in the exposed portions 410 is larger. Accordingly, by widening the radial direction width of the flow path 10 near the exposed portions 410, a decrease in the speed of the air flow inside the flow path 10 is suppressed. Accordingly, a decrease in the efficiency of heat dissipation in the exposed portions 410 is suppressed, and cooling of the stator 21 can be performed in a further efficient manner.

In the present embodiment, as illustrated in Fig. 3, in the area in the axial direction where the stator core 211 is disposed, the window portion 226 and a portion in the lateral plate portion 222 that covers the outer peripheral surface of the core back 41 are disposed alternately in the motor cover 22. In other words, the motor cover 22 covers at least a portion of the outer peripheral surface of the core back 41. As described above, by providing portions that cover the core back 41 in the motor cover 22, the fixing strength between the motor cover 22 and the core back 41 is improved.

The underside of the lower shroud 52 of the impeller 12 and the upper surface of the motor cover 22 oppose each other in the axial direction with a lower side axial direction gap 70 in between. As illustrated in Fig. 4, a washer 14 having a substantially T-shaped longitudinal section is in contact with the underside of the impeller 12. The washer 14 includes a cylindrical shaft portion 141, an inner peripheral surface of which is in contact with an outer peripheral surface of the shaft 31, and a flange portion 142 that extends outwards in the radial direction from an upper end of the shaft portion 141. A lower end face of the shaft portion 141 is in contact with an upper surface of the upper bearing 25. In other words, the washer 14 is positioned on the underside of the lower shroud 52, and is an annular contact member that is in contact with the rotating portion 30 of the motor 11. An underside of the flange portion 142 of the washer 14 and the upper surface of the motor cover 22 oppose each other in the axial direction with the lower side axial direction gap 70 in between.

The motor cover 22 includes three annular motor projection portions 61, 62, and 63 that protrude upwards from the upper surface of the motor cover 22. The three motor projection portions 61, 62, and 63 are arranged in the radial direction.

A first lower side labyrinth portion 71 is formed between the first motor projection portion 61 that is, among the three motor projection portions 61, 62, and 63, disposed on the outermost side in the radial direction and the underside of the lower shroud 52. A second lower side labyrinth portion 72 is formed between the second motor projection portion 62 disposed inside the first motor projection portion 61 in the radial direction and outside the third motor projection portion 63 in the radial direction, and the underside of the lower shroud 52. Furthermore, a third lower side labyrinth portion 73 is formed between the third motor projection portion 63 that is, among the three motor projection portions 61, 62, and 63, disposed on the innermost side in the radial direction and the underside of the flange portion 142 of the washer 14.

As described above, the lower side axial direction gap 70 includes three lower side labyrinth portions 71, 72, and 73 in which the widths in the axial direction become partially narrow. With the above, leaking of the air flow towards the inner side of the lower side axial direction gap 70 in the radial direction from the outer side of the impeller 12 in the radial direction and from the blowing path, which extends along the outer peripheral surface of the motor 11 and towards the inside of flow path 10, can be suppressed. As a result, a decrease in the flow rate of the gas passing inside the flow path 10 can be suppressed. Accordingly, a decrease in the efficiency of heat dissipation in the exposed portions 410 is suppressed, and cooling of the stator 21 can be performed in a further efficient manner.

In the present embodiment, in order to form the lower side labyrinth portions 71, 72, and 73, the motor projection portions 61, 62, and 63 serving as projection portions are provided not on the impeller 12 side, the impeller 12 serving as a body of rotation, but on the motor cover 22 side, the motor cover 22 serving as a stationary member. With the above, compared with a case in which the projection portions are provided on the underside of the lower shroud 52 of the impeller 12, the load, such as centrifugal force, acting on the impeller 12 can be reduced. However, the lower side labyrinth portions may be formed by providing projection portions on the underside of the lower shroud 52 of the impeller 12.

Furthermore, in the centrifugal blower 1, three lower side labyrinth portions 71, 72, and 73 are provided in the lower side axial direction gap 70. As described above, by having the lower side axial direction gap 70 have three or more lower side labyrinth portions therein, leaking of the air flow can be suppressed further.

In a case in which the lower side labyrinth portions provided in the lower side axial direction gap 70 is one, compared with a case in which no lower side labyrinth portion is provided, while the suction power becomes high in the range in which the rotation speed of the motor 11 is low (5000 rotation per minute, for example), in the range in which the rotation speed is high (60,000 rotations per minute, for example), no significant improvement in the suction power is seen. As the number of lower side labyrinth portions provided in the lower side axial direction gap 70 increases, the suction power also improves in the range in which the rotation speed of the motor 11 is high.

The centrifugal blower 1 is used in a vacuum cleaner, and is used in a high rotation range of about 60,000 rotations per minute. Accordingly, it is desirable that three or more lower side labyrinth portions be provided in the lower side axial direction gap 70.

In the present embodiment, among the three motor projection portions 61, 62, and 63, the first motor projection portion on the outermost side 61 is disposed in substantially the middle of the central axis 9 and the inner peripheral surface of the blower casing 13. As described above, by disposing the motor projection portions 61, 62, and 63, as much as possible, on the inner side in the radial direction, even if the impeller 12 were to rotate at a high speed, the resistance force that the impeller 12 receives can be reduced. The motor projection portions provided on the upper surface of the motor cover 22 are, desirably, disposed on the inner side in the radial direction with respect to a middle point between the central axis 9 and the inner peripheral surface of the blower casing 13 in the radial direction.

Furthermore, as illustrated in Fig. 4, the third lower side labyrinth portion 73 is disposed below the first lower side labyrinth portion 71 and the second lower side labyrinth portion 72 in the axial direction. In other words, the third lower side labyrinth portion 73 disposed, among lower side labyrinth portions 71, 72, and 73, on the innermost side in the radial direction is, in the axial direction, disposed below the first lower side labyrinth portion 71 disposed on the outermost side in the radial direction. As described above, one of the plurality of lower side labyrinth portions 71, 72, and 73 has a height in the axial direction that is different from that of another one of the plurality of lower side labyrinth portions 71, 72, and 73. With the above, generation of air flow in the radial direction can be suppressed further inside the lower side axial direction gap 70.

Furthermore, the length of the first lower side labyrinth portion 71 in the radial direction is longer than the length of the second lower side labyrinth portion 72 in the radial direction and the length of the third lower side labyrinth portion 73 in the radial direction. As described above, by providing a lower side labyrinth portion that has a longer length in the radial direction, generation of the air flow inside the lower side axial direction gap flowing from the outer side in the radial direction towards the inner side can be suppressed further. Accordingly, desirably, one of the length of the plurality of lower side labyrinth portions 71, 72, and 73 in the radial direction is longer than the length of another one of the plurality of lower side labyrinth portions 71, 72, and 73 in the radial direction. Particularly, as in the present embodiment, desirably, the first lower side labyrinth portion 71 on the outermost side in the radial direction is long.

### <3. Third Embodiment>

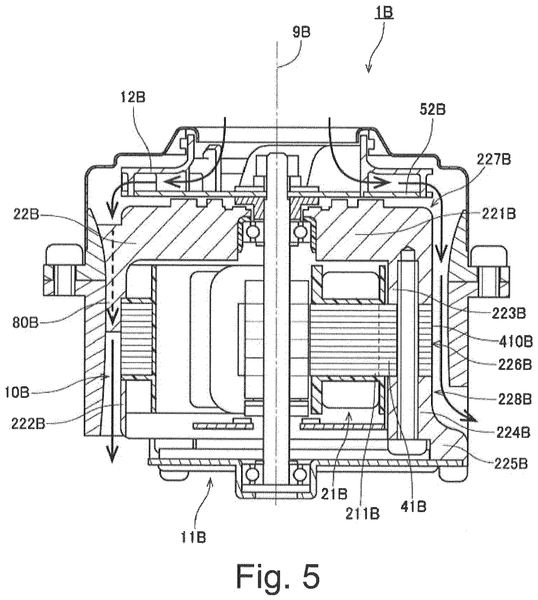

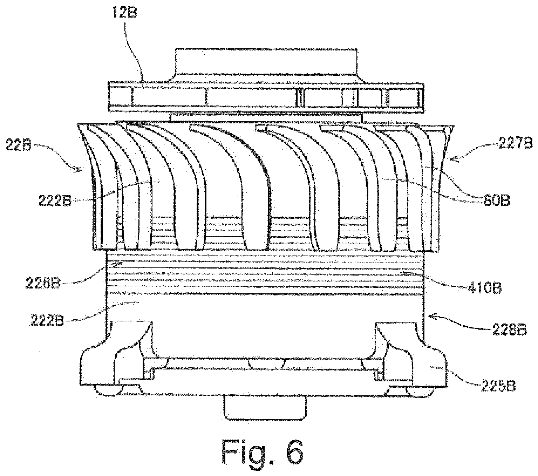

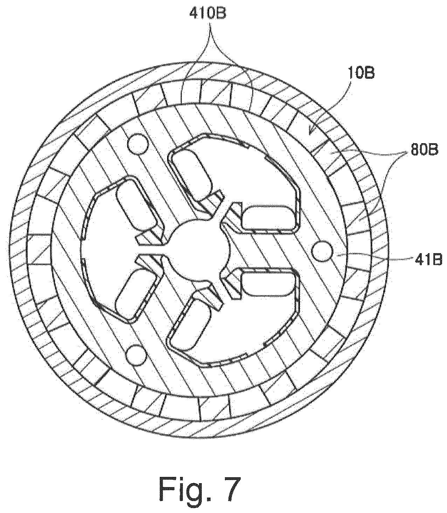

Fig. 5 is a longitudinal section of a centrifugal blower 1B according to a third embodiment. Fig. 6 is a side view of a motor 11B and an impeller 12B of the centrifugal blower 1B. Fig. 7 is a cross-sectional view of the centrifugal blower 1B in an area in the axial direction where a stator core 211B and stator blades 80B are disposed.

Other than shapes of a motor cover 22B and a stator core 211B, the centrifugal blower 1B has a structure that is similar to that of the centrifugal blower 1 of the second embodiment. Hereinafter, points that are different from the centrifugal blower 1 according to the second embodiment will be described.

In the present embodiment, as illustrated in Figs. 5 to 7, the motor cover 22B includes the plurality of stator blades 80B. The stator blades 80B protrude from a lateral plate portion 222B towards an outer side in the radial direction, and are disposed inside a flow path 10B. Furthermore, the stator blades 80B are disposed so as to be spaced apart from each other in the circumferential direction and in a substantially equidistance in the circumferential direction. By disposing the stator blades 80B inside the flow path 10B, the air flow that has flowed into the flow path 10B from the impeller 12B is rectified by the stator blades 80B. Accordingly, noise while the centrifugal blower 1B is driven can be reduced.

The motor cover 22B includes a window portion 226B continuing in an annular manner. With the above, the motor cover 22B is constituted by two members, namely, an upper side motor cover 227B and a lower side motor cover 228B that are separated by the window portion 226B. The upper side motor cover 227B includes an upper plate portion 221B, a portion of the lateral plate portion 222B that is disposed on an upper side of the window portion 226B, a first fixed portion 223B, and the stator blades 80B. The lower side motor cover 228B includes a portion of the lateral plate portion 222B that is disposed on a lower side of the window portion 226B, a second fixed portion 224B, and a third fixed portions 225B.

In the centrifugal blower 1B, as described above, the window portion 226B is disposed in the entire circumferential direction. Furthermore, lower end portions of the stator blades 80B are disposed between an upper end portion and a lower end portion of the window portion 226B. With the above, in the lower sides of the stator blades 80B, an exposed portion 410B is provided in the entire circumference of an outer peripheral surface of a core back 41B of the stator core 211B. Furthermore, in the area in the axial direction where the stator core 211B and the stator blades 80B are both disposed, as illustrated in Fig. 7, a stator blade 80B and an exposed portion 410B are disposed alternately in the circumferential direction. In other words, the exposed portion 410B is disposed between the stator blades 80B that are adjacent to each other in the circumferential direction.

Note that the upper side motor cover 227B and the lower side motor cover 228B may be connected members that are connected into one at portions in the circumferential direction. For example, the stator blades 80B may be extended below the window portion 226B, and the upper side motor cover 227B and the lower side motor cover 228B may be connected through the stator blades 80B.

Furthermore, in the centrifugal blower 1B, a distance in the radial direction between a central axis 9B and an outer end of the exposed portion 410B in the radial direction substantially coincides with a distance in the radial direction between the central axis 9B and an outer end of a lower shroud 52B of the impeller 12B in the radial direction. With the above, the air flow discharged from the impeller 12B can be in contact with the exposed portion 410B without flowing on the inner side of the lower shroud 52B in the radial direction with respect to the outer end of the lower shroud 52B in the radial direction. Accordingly, a decrease in the efficiency of heat dissipation in the exposed portion 410B is suppressed, and cooling of the stator 21B can be performed in a further efficient manner.

Note that the distance in the radial direction between the central axis 9B and the outer end of the exposed portion 410B in the radial direction may be longer than the distance in the radial direction between the central axis 9 and the outer end of the lower shroud 52B of the impeller 12B in the radial direction. In such a case as well, the air flow discharged from the impeller 12B can be in contact with the exposed portion 410B without flowing on the inner side of the lower shroud 52B in the radial direction with respect to the outer end of the lower shroud 52B in the radial direction.

In the present embodiment, a distance between the central axis 9B and the outer peripheral surface of the motor cover 22B in the radial direction substantially coincides with a distance between the central axis 9B and an outer end of the lower shroud 52B of the impeller 12B in the radial direction. In other words, an outer peripheral surface of the lateral plate portion 222B and an outer peripheral surface of a stator 21B constituting the flow path 10B are disposed on the same cylindrical surface. As described above, since the outer peripheral surface of the motor 11B constituting the flow path 10B does not have any unevenness, the speed of the air flow flowing downwards inside the flow path 10 does not become decreased easily. With the above, a decrease in the air blowing efficiency of the centrifugal blower 1B can be suppressed further, and cooling of the stator 21B can be performed in a further efficient manner.

### <4. Modification>

The exemplary embodiments of the present invention have been described above; however, the present invention is not limited to the embodiments described above.

In the embodiments described above, the exposed portion of the stator core extended from the upper end to the lower end of the outer peripheral surface of the core back. However, the exposed portion may be disposed in only a portion of the outer peripheral surface of the core back in the axial direction.

Furthermore, in the third embodiment, the stator blades extend from the inner end of the flow path in the radial direction to the outer end in the radial direction. However, the stator blades may be disposed in a partial area in the flow path in the radial direction.

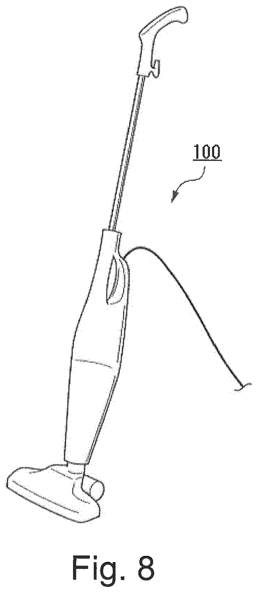

Fig. 8 is a perspective view of a vacuum cleaner 100. The vacuum cleaner 100 includes the centrifugal blower described above. With the above, the stator of the centrifugal blower mounted in the vacuum cleaner 100 can be cooled efficiently without decrease in the air blowing efficiency of the vacuum cleaner 100.

Furthermore, the detailed shapes of the members may be different from the shapes illustrated in the drawings of the present application. Furthermore, the elements described above may be combined appropriately within the range producing no contradictions.

The present invention can be used in a centrifugal blower and in a vacuum cleaner. Reference Signs List

1, 1A, 1B centrifugal blower
9, 9A, 9B central axis
10, 10A, 10B flow path
11, 11A, 11B motor
12, 12A, 12B impeller
13, 13A blower casing
21, 21A, 21B stator
22, 22A, 22B motor cover
41, 41A core back
42, 42A teeth
51 upper shroud
52, 52B lower shroud
61, 62, 63 motor projection portion
70 lower side axial direction gap
71, 72, 73 lower side labyrinth portion
80B stator blade
101, 101A intake port
102, 102A discharge port
131, 131A upper side casing top plate portion
132, 132A wall portion
201, 201A upper surface
202, 202A outer peripheral surface
211, 211A,211B stator core
213, 213A coil
221, 221B upper plate portion
222, 222B lateral plate portion
226, 226B window portion
410, 410A, 410B exposed portion

## Claims

1. A centrifugal blower comprising:
a stationary portion that includes a stator and a motor cover that holds the stator;
a motor that includes a rotating portion that rotates about a vertically extending central axis;
a centrifugal impeller that is disposed above the motor and that rotates together with the rotating portion; and
a blower casing that houses therein the motor and the impeller,
wherein the stator includes a stator core that includes a toric core back and a plurality of teeth that extend inwards in a radial direction,
wherein a coil is formed of a conductive wire wound around the teeth,
wherein the motor cover includes an upper surface above the stator, the upper surface widening in a substantially perpendicular manner with respect to the central axis, and a cylindrical outer peripheral surface that extends downwards from an outer edge of the upper surface,
wherein the blower casing includes an intake port, an upper side casing top plate portion disposed above the impeller, the intake port being disposed at a middle of the upper side casing top plate portion, and a cylindrical wall portion that extend downwards from the upper side casing top plate portion to an outer side of the motor cover in the radial direction,
wherein a flow path continuous in the axial direction is constituted by an inner peripheral surface of the wall portion and the outer peripheral surface of the motor cover,
wherein a discharge port in communication with an external space is provided at a lower end portion of the flow path, and
wherein the core back includes an exposed portion exposed to the flow path in at least a portion of the outer peripheral surface of the core back.

2. The centrifugal blower according to claim 1,
wherein the impeller includes a plate-shaped lower shroud that extends in a substantially perpendicular manner with respect to the central axis, an underside of the lower shroud opposing an upper surface of the motor cover, an upper shroud disposed above the lower shroud, the intake port being provided at a middle of the upper shroud, and a plurality of blades disposed between the lower shroud and the upper shroud, and
wherein a distance in the radial direction between the central axis and the outer peripheral surface of the motor cover in the radial direction substantially coincides with a distance in the radial direction between the central axis and an outer end of the lower shroud in the radial direction, or is longer than the distance in the radial direction between the central axis and the outer end of the lower shroud in the radial direction.

3. The centrifugal blower according to claim 1,
wherein the impeller includes a plate-shaped lower shroud that extends in a substantially perpendicular manner with respect to the central axis, an underside of the lower shroud opposing an upper surface of the motor cover, an upper shroud disposed above the lower shroud, the intake port being provided at a middle of the upper shroud, and a plurality of blades disposed between the lower shroud and the upper shroud, and
wherein a distance in the radial direction between the central axis and an outer end of the exposed portion in the radial direction substantially coincides with a distance in the radial direction between the central axis and an outer end of the lower shroud in the radial direction, or is longer than the distance in the radial direction between the central axis and the outer end of the lower shroud in the radial direction.

4. The centrifugal blower according to claim 1,
wherein the impeller includes a plate-shaped lower shroud that extends in a substantially perpendicular manner with respect to the central axis, an underside of the lower shroud opposing an upper surface of the motor cover, an upper shroud disposed above the lower shroud, the intake port being provided at a middle of the upper shroud, and a plurality of blades disposed between the lower shroud and the upper shroud, and
wherein the underside of the lower shroud and the upper surface of the motor cover oppose each other in the axial direction with a lower side axial direction gap in between, the lower side axial direction gap including a lower side labyrinth portion in which a width in the axial direction is partially narrow.

5. The centrifugal blower according to any one of claims 1 to 4,
wherein the exposed portion is, in the core back, provided on an outer side of the teeth in the radial direction.

6. The centrifugal blower according to claim 5,
wherein a width of the exposed portion in a circumferential direction is wider than a width of the teeth in the circumferential direction.

7. The centrifugal blower according to any one of claims 1 to 6,
wherein the motor cover covers at least a portion of the outer peripheral surface of the core back.

8. The centrifugal blower according to any one of claims 1 to 7,
wherein a distance in the radial direction between the central axis and the exposed portion is shorter than a distance in the radial direction between the central axis and a portion in the outer peripheral surface of the motor cover that opposes the flow path.

9. The centrifugal blower according to any one of claims 1 to 8,
wherein the motor cover includes a plurality of stator blades that are disposed inside the flow path and that are disposed so as to be spaced apart from each other in a circumferential direction, and the exposed portion is disposed between adjacent stator blades.

10. A vacuum cleaner including a centrifugal blower according to any one of claims 1 to 9.
